# EUROPEAN PATENT APPLICATION

(11) **EP 3 591 217 A1**
(43) Date of publication of application: **08.01.2020**
(21) Application number: 19184014.9
(22) Date of filing: 02.07.2019
(51) Int. Cl.: F03B 7/00

(54) **A HYDRAULIC SCREW MACHINE AND AN ENERGY TRANSFORMATION HYDRAULIC PLANT HAVING SUCH HYDRAULIC MACHINE**

(30) Priority: 02.07.2018 IT 201800006865
(71) Applicant: PRO.E.PRO. DI COSTAMAGNA ANGELO & C S.A.S., 12039 Verzuolo (CN) (IT); CALANDRI AUTOMAZIONE S.N.C. DI CALANDRI DANIELE E PAOLO & C., 12045 Fossano (CN) (IT)
(72) Inventor: COSTAMAGNA, Angelo, 12042 Bra (CN) (IT); CALANDRI, Daniele, 12045 Fossano (CN) (IT); CALANDRI, Paolo, 12045 Fossano (CN) (IT)
(74) Representative: Lovino, Paolo

(57) **Abstract**

A hydraulic screw machine (8) has a rotor (16) supported to be able to rotate about an axis (C) and tilted with respect to a horizontal direction; the rotor (16) has a tubular casing (19) with an upper end and a lower end (20, 21), opposite to each other, and a hydraulic screw (30) that extends along the axis (C) in the casing (19) and is coupled in a fixed manner to the casing (19); the screw is provided with at least one helicoid (35, 35', 35") having a radially outer helical edge (36, 36', 36") that ends in an upper vertex (T, T', T") at the upper end (20); the rotor further has a compartment (42, 42', 42") axially delimited by an end portion (37, 37', 37") of the helicoid (35, 35, 35") and an ideal plane (F) passing through the upper vertex (T, T', T") and orthogonal to the axis (C); the compartment (42, 42', 42") has at least one radial opening towards the outside.

## Description

### CROSS-REFERENCE TO RELATED APPLICATIONS

This patent application claims priority from Italian patent application no. 102018000006865 filed on 02/07/2018.

### TECHNICAL FIELD

The present invention relates to a hydraulic screw machine.

### BACKGROUND ART

Hydraulic screw or auger machines are machines that are known to be used both as a pump to lift a liquid, generally water, and as a turbine to transform the gravitational potential energy of the liquid into mechanical energy.

As already known, a hydraulic screw machine comprises a cylindrical outer casing, commonly referred to as the "trough", and a screw arranged inside the outer casing. In particular, the screw consists of a central shaft and of a plurality of helical walls welded to the central shaft and defining respective starts of the screw.

In the most common machines, the screw is rotatable with respect to the casing. However, in other solutions, the screw is coupled in a fixed manner to a pipe-shaped casing to get rid of any efficiency losses due to liquid leakage between the outer edges of the helical walls and the inner surface of the pipe.

The machine is installed between an upstream basin and a downstream basin in a tilted position with respect to a horizontal plane. In particular, the pipe has an upper end and a lower end, which are partially immersed, respectively, in the upstream basin when the machine is used as a turbine and in the downstream basin when the machine is used as a pump.

When the machine operates as a turbine, the liquid contained in the upstream basin descends by gravity inside the pipe towards the downstream basin, thus turning the screw, whose shaft is coupled to a load, for example an alternator for generating electricity.

The inclination of the machine with respect to the horizontal plane has a value set on a project basis (for example 22°) as a compromise between machine efficiency and production costs. In fact, the smaller the inclination, the greater the necessary length of the screw, corresponding to greater costs.

The size of the pipe and the geometric-dimensional properties of the screw are also normally set on a project basis, as well as the angular speed of the shaft, with the aim of allowing the machine operating as a turbine to regularly process the entire flow rate of liquid offered by the upstream basin.

The liquid fills the space between the helical walls, forming a row of separate volumes. At each round of the machine operating as a turbine, the screw collects from the upstream basin a number of volumes equal to the number of starts of the screw.

The amount of liquid in each volume can reach up to a maximum threshold, commonly referred to as the "summit point" (beyond which the liquid is automatically poured into the next downstream volume).

In order to reach this threshold at least theoretically, the pipe must be immersed in the liquid at a certain minimum depth. In this theoretical condition, according to the principle of communicating vessels, the free surface of the liquid in the upstream basin is at the same level with the "summit point" of the volume that fills first at the upper end of the screw. Actually, the speed of rotation and the number of starts of the screw generally have a negative effect on the amount of liquid in the volumes and, therefore, on the achievement of the aforementioned maximum threshold.

To counteract the negative effect of the rotation speed and of the number of starts, the inlet of the pipe is usually immersed at a depth greater than the minimum theoretical depth defined above, so that an upper layer of liquid generates a hydrostatic pressure that corresponds to a local increase in the speed of the liquid towards the inlet, so as to favour the entry of the liquid into the pipe and thus favour the achievement of the maximum threshold.

Therefore, a non-negligible portion of the hydraulic head available between the upstream and downstream basins is not used for the generation of mechanical energy, but is only used to favour a maximum filling of the machine, namely to maximize the amount of liquid in the aforementioned volumes.

Consequently, there is the need to exploit the available hydraulic head as much as possible, without thereby having a reduction in the filling level of the machine.

### DISCLOSURE OF INVENTION

Therefore, an object of the present invention is to provide a hydraulic screw machine that fulfils the requirement set forth above in a simple and inexpensive manner.

According to the present invention, it is provided a hydraulic screw machine as defined in claim 1.

The present invention also relates to an energy transformation hydraulic plant.

According to the present invention, it is provided an energy transformation hydraulic plant as defined in claim 9.

### BRIEF DESCRIPTION OF THE DRAWINGS

The invention will now be described with reference to the annexed drawings showing a particular non-limiting embodiment, in which:
- Figure 1 is a perspective view with schematic parts of an energy transformation hydraulic plant provided with a preferred embodiment of the hydraulic screw machine according to the present invention;
- Figure 2 is a side view, with parts removed for clarity's sake and on an enlarged scale, of the machine of Figure 1;
- Figure 3 is a perspective view of a detail of the machine of Figures 1 and 2;
- Figures 4 and 5 show perspective variants of the hydraulic screw machine according to the present invention.

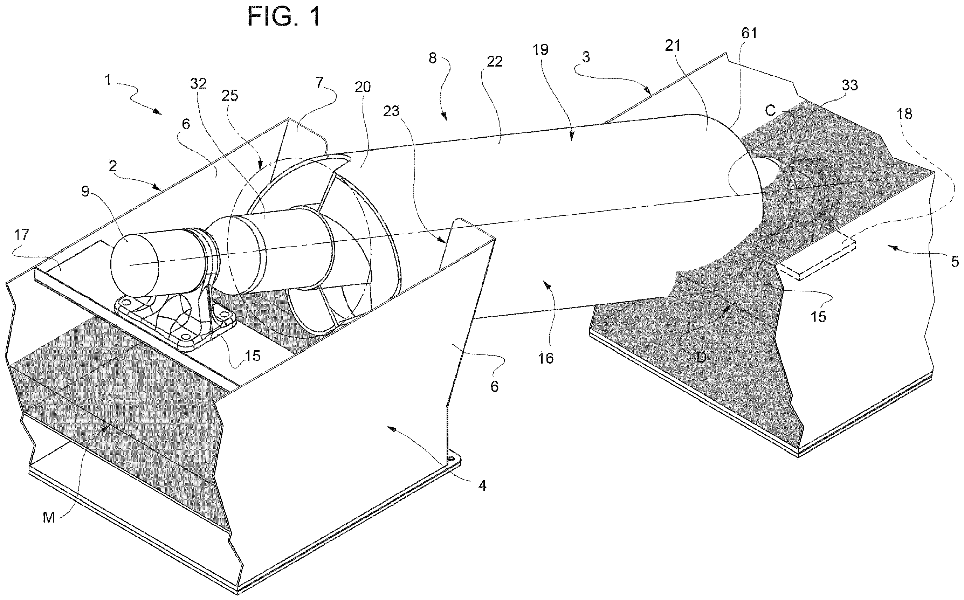

In Figure 1, the reference number 1 indicates, as a whole, a hydraulic energy transformation plant (partially shown), more particularly a plant for transforming the gravitational potential energy of a liquid, preferably water, into electrical energy.

### BEST MODE FOR CARRYING OUT THE INVENTION

The plant 1 comprises an upstream basin 2 and a downstream basin 3 arranged at a lower level than the upstream basin 2 and horizontally spaced from this latter.

The upstream basin 2 and the downstream basin 3 contain corresponding liquid masses defining, respectively, an upstream zero pressure plane M and a downstream zero pressure plane D. Here and below, "zero pressure plane" indicates the points where the liquid pressure is zero, i.e. the free surface of the liquid.

Compared to the downstream zero pressure plane D, the upstream zero pressure plane M has a level, in the vertical direction, that defines a hydraulic head suitable for power generation by exploiting the potential energy of the liquid mass in the upstream basin 2.

In the specific example, the basins 2, 3 comprise respective artificially formed tanks 4, 5 (schematically shown). The tank 4 preferably comprises a pair of side walls 6 and a front bulkhead 7, which is transverse to the walls 6 and is arranged towards the downstream basin 3 so as to prevent the liquid from descending towards the downstream basin 3. Alternatively, the basins 2, 3 may at least partially be of natural formation. The front bulkhead 7 is in any case defined by a suitably formed and/or positioned wall.

Moreover, the plant 1 comprises a hydraulic screw machine 8 that, in the specific example shown, operates as a turbine to allow the descent of liquid from the upstream basin 2 to the downstream basin 3 and, consequently, to transform the gravitational potential energy associated with the hydraulic head into mechanical energy.

The plant 1 further comprises a load 9 (schematically shown) coupled to the machine 8 so as to be able to receive the mechanical energy generated by the machine 8. Preferably, the user 9 is a device suitable for transforming this mechanical energy into electrical energy, e.g. an alternator.

The machine 8 comprises at least one pair of supports 15, arranged in a fixed position with respect to the basins 2, 3, and a rotor 16, which extends along an axis C tilted with respect to a horizontal direction, is coupled to the supports 15 in a rotating manner about the axis C and activates the load 9 in a known manner not described in detail.

In particular, the supports 15 are fastened on respective horizontal crosspieces 17, 18, which are respectively part of the upstream basin 2 and of the downstream basin 3, are respectively arranged above and below the relative zero pressure planes M, D and are fixed with respect to the tanks 4, 5.

The rotor 16 comprises a tubular casing 19 having an upper end 20 arranged inside the upstream basin 2, a lower end 21 in a position opposite the end 20 along the axis C, and an intermediate portion 22 between the ends 20, 21.

The portion 22 engages a seat 23 formed on the bulkhead 7 and is coupled to this latter so as to prevent or limit the leakage of liquid from the tank 4. In particular, the seat 23 is U-shaped.

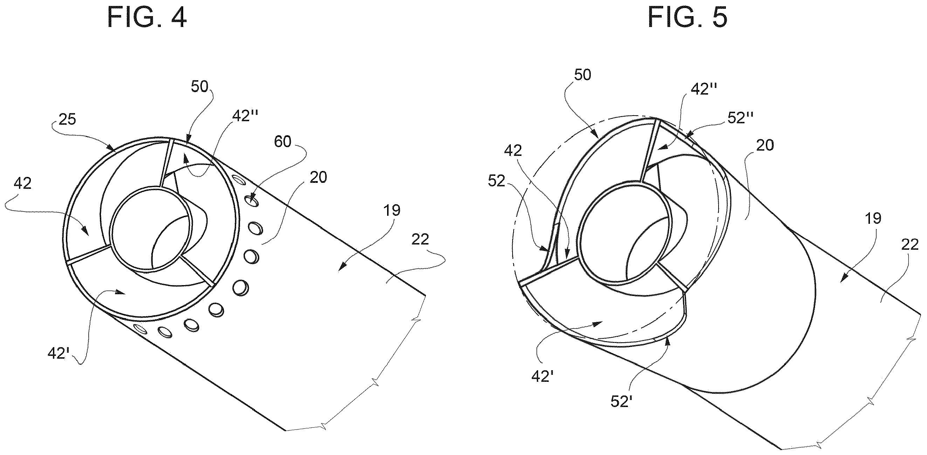

The end 20 has an axial opening 25 partially immersed in the liquid contained in the tank 4, so that the liquid can enter by gravity inside the casing 19 and cause the rotation of the rotor 16. Preferably, the end 20 has a cylindrical shape. Alternatively, according to the variant of Figure 5, the end 20 has a truncated conical shape diverging towards the axial opening 25.

On the other hand, according to the particular embodiment shown in Figure 1, the end 21 ends with an axial opening (not shown), which is partially immersed in the liquid contained in the tank 5 so as to allow the liquid descending in the casing 19 to get onto the downstream basin 3.

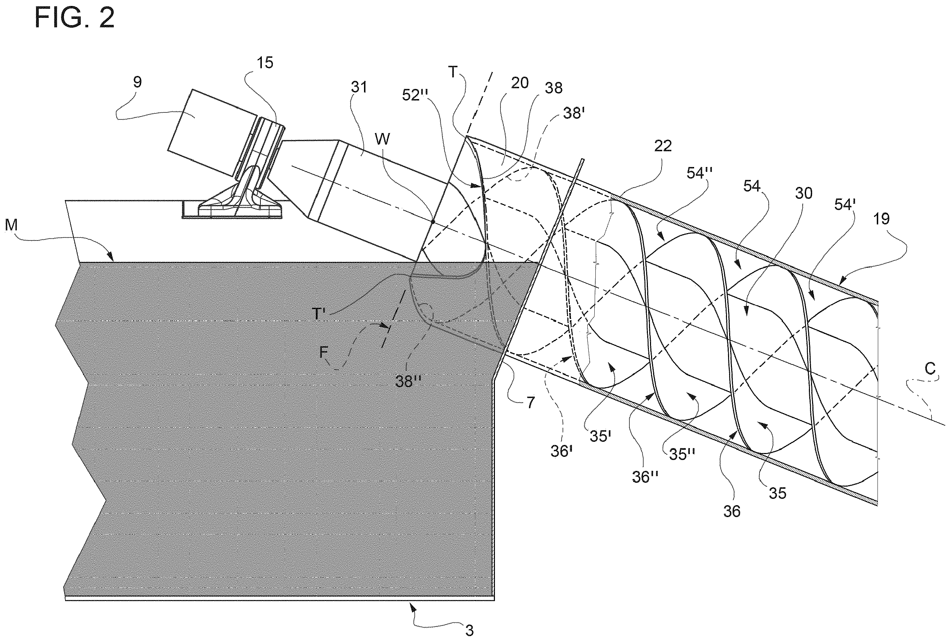

As shown in Figure 2, the rotor 16 further comprises a hydraulic screw 30, which extends inside the casing 19 along the axis C, is fixed with respect to the casing 19, advantageously forming a single piece with this latter, and is suitable for being rotated by the liquid descending in the casing 19.

The screw 30 comprises a shaft 31 coaxial with the casing 19 and comprising two ends 32, 33, which are conveniently arranged outside the casing 19, respectively above and below the zero pressure planes M, D, and coupled in an axially fixed and in an angularly movable way to the supports 15. The screw 30, moreover, comprises at least one helicoid 35, which is wound about the shaft 31, is arranged completely inside the casing 19 and has an outer radial edge 36 that extends in a helical manner along an inner surface of the casing 19.

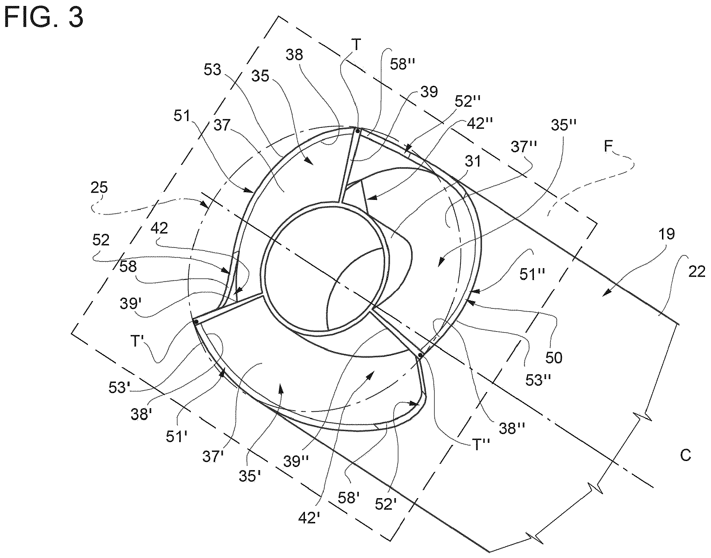

The outer radial edge 36 comprises a final stretch 38 that ends with an upper vertex T at the end 20. In other words, the helicoid 35 comprises a helical end portion 37 (Figure 3) extending from a substantially radial edge 39, which intercepts the inner surface of the casing 19 at the vertex T.

The vertex T and the opening 25 lie on an ideal plane F, which is orthogonal to the axis C. In Figure 2, the point of intersection between the axis C and the plane F is indicated by the reference symbol W.

The ideal plane F and the end portion 37 axially delimit between them a compartment 42, which in turn is radially delimited inwardly by the shaft 31. The compartment 42 constitutes an antechamber for the entry of the liquid into the casing 19.

Thus, the opening 25 defines an inlet of the compartment 42 along a direction parallel to the axis C.

According to an aspect of the invention, the compartment 42 is at least partially open radially towards the outside (with respect to the axis C) to allow the entry of the liquid into the compartment 42 also in a radial direction.

In particular, the end 20 axially ends with a contour 50, which comprises at least one recessed portion 51, preferably ending in the vertex T and defining a radial recess or opening 52 that extends axially to the ideal plane F. More particularly, as also visible in Figure 3, the portion 51 has a stretch 53 that substantially coincides with the stretch 38 until it ends in the vertex T, i.e. is flush with the end portion 37.

According to an advantageous aspect of the invention, the screw 30 comprises a plurality of helicoids, in particular two further helicoids 35', 35" arranged completely inside the casing 19. In other words, the screw 30 has three distinct starts. In particular, the helicoids 35, 35', 35" are equal to each other and offset by 120° with respect to each other.

The helicoids 35, 35' and 35", the outer surface of the shaft 31 and the inner surface of the casing 19 delimit three helical channels 54, 54', 54" for the descent of the liquid from the upstream basin 2 towards the downstream basin 3.

The helicoids 35, 35', 35" are homologous between each other, so the parts constituting the helicoids 35', 35" will be indicated by the reference numbers used for the corresponding parts of the helicoid 35, but followed respectively by one apex and two apices.

The points T', T" lie conveniently on the same plane F. More in detail, the vertices T, T', T" are arranged at the opening 25 in angularly equally spaced positions about the axis C.

In other words, as also shown in Figure 3, the vertices T, T', T" are the intersections of the substantially radial edges 39, 39', 39" with the contour 50.

Like the end portion 37, the end portions 37', 37" axially define with the plane F respective compartments 42', 42", separated from each other and from this latter, in a circular direction, through the substantially radial edges 39, 39', 39". The compartments 42, 42', 42" define respective antechambers for the entry of the liquid into the corresponding helical channels 54, 54', 54".

According to a further advantageous aspect of the invention, also the compartments 42', 42" are radially open through respective recesses or radial openings 52', 52", so as to allow the entry of the liquid in a radial direction with respect to the axis C in the same compartments 42', 42".

In particular, the openings 52'and 52" are equal and offset by 120° with respect to the opening 52, so they are defined by parts indicated by the same reference numbers, followed respectively by one apex and two apexes.

Therefore, the recessed portions 51, 51' and 51" comprise respective stretches 53, 53', 53", which respectively end in the vertices T, T' and T" and are flush with the corresponding stretches 38, 38', 38" of the helicoids 35, 35', 35". Moreover, the recessed portions 51, 51' and 51" comprise respective stretches 58, 58', 58" that are concave, are connected to the stretches 53, 53', 53" without cusps and/or steps, and preferably start respectively from the vertices T", T, T'.

According to the variant of Figure 4, the contour 50 is circular, i.e. without the recesses 52, 52', 52", so that it defines an edge of the opening 25. At the same time, the recesses 52, 52', 52" are replaced by a plurality of through holes 60 radially formed through the end 20. The through holes 60 allow, like the recesses 52, 52', 52", the liquid entry into the compartments 42, 42', 42" in a radial direction with respect to the axis C, albeit in a less effective manner.

Unlike the end 20, the end 21 extends continuously along the axis C until it ends with a contour 61 without recesses and preferably circular, i.e. the end 21 is devoid of through openings passing radially outwards. In fact, the presence of recesses or openings would cause large discrete volumes of liquid to pervade abruptly and cyclically the downstream basin 3. During the use of the machine 8 as a turbine, the sudden introduction of the liquid into the downstream basin 3 would cause the cyclic production of loud noises and turbulence inside the tank 5. Moreover, due to these turbulences, the tank 5 would be subject to greater erosion and wear.

During the operation of the machine 8 as a turbine under steady-state conditions, the rotor 16 rotates at a constant angular speed about the axis C. In the rotation of the rotor 16, each of the compartments 42, 42', 42" is immersed in the upstream basin 2 below the zero pressure plane M. The inlet of each corresponding channel 54, 54', 54" draws liquid from the upstream basin 2 up to the moment when the substantially radial edge 39, 39', 39" rises above this zero pressure plane M. Therefore, a discrete volume of liquid drawn from the upstream basin 2 flows inside the corresponding channel 54, 54', 54".

At each turn, each channel 54, 54', 54" can draw a maximum amount of liquid, beyond which the liquid would heavily fall inside the channel 54, 54', 54". When this maximum amount of liquid is reached, its level in the corresponding channel 54, 54', 54" is commonly defined as a "summit point".

In general, there is the need to draw this maximum amount of liquid. Thanks to the present invention, this requirement is met just by installing the machine 8 immersing the end 20 inside the upstream basin 2, so that the aforementioned "summit point" is substantially at the same level with the zero pressure plane M and not at a significantly lower level. In this way, the liquid of the upstream basin 2 pervades the inside of the pipe 19 up to the "summit point" due to the principle of communicating vessels.

In fact, unlike the known solutions, the amount of liquid actually drawn by the inlet of each channel 54, 54', 54" is marginally influenced by the angular speed of the rotor 16 and by the number of starts of the screw 30. This is obtained thanks to the presence of the radial openings 52, 52', 52" (or of the holes 60), which allow the liquid in the upstream basin 2 to enter radially in the respective compartments 42, 42', 42", thus facilitating the filling of these latter.

Instead, to draw the same amount of liquid with a known machine, without radial openings and/or holes, the machine must be immersed in the upstream basin 2 so that the "summit point" is lower than the zero pressure plane M, in particular by an amount equal to about 10-12% of the available hydraulic head. Thus, the layer of liquid above the "summit point" generates, in the prior art solutions, a hydrostatic pressure that involves a local increase in the speed of the liquid towards the machine, so that the entry of liquid into the machine is facilitated. However, this upper layer of liquid does not contribute to the generation of energy, giving rise to an "energy loss" in terms of failure to exploit the actually available hydraulic head.

Such a significant drop in the "summit point" with respect to the zero pressure plane M becomes unnecessary by using the machine 8, since the liquid can easily enter the channels 54, 54', 54" thanks to the fact that the compartments 42, 42' , 42" are radially open. Thus, the machine 8 is able to exploit approximately the entire available hydraulic head and, therefore, to generate more energy than the known solutions, while maintaining high filling levels.

This result, estimated on a project basis, was confirmed by an experimental comparison between a scale model of the machine 8 of the present invention and a model having the same geometric and dimensional characteristics, except for the upper axial end of the rotor that lacked all radial openings in the second model.

The comparison was carried out under conditions of escape speed, namely without load, under fixed flow rate conditions and with the same inclination of the rotation axes of the rotors. It resulted that the level of the upstream zero pressure plane in the scale model according to the present invention was about 10% lower than the one measured in the second model.

Further advantages of the machine 8 are evident from what has been described and shown above.

For example, since the screw 30 has a plurality of starts, the machine 8 can process a greater flow rate than a corresponding machine in which the screw has only one start. On the other hand, as the number of starts increases, the turbulence that the motion of the rotor 16 causes to the liquid in the upstream basin increases too.

In this regard, the Applicant evaluated that three starts are an excellent compromise in relation to the processable capacity and efficiency of the machine.

Moreover, thanks to the fact that the stretches 38, 38', 38" develop flush with the corresponding end portions 37, 37', 37", the liquid in the upstream basin 2 can be more easily guided towards the inlet of the channels 54, 54', 54" by the same end portions 37, 37', 37".

Finally, the fact that the recesses 52, 52', 52" are defined between the contour 50 and the ideal plane F guarantees a maximum radial aperture of the compartments 42, 42', 42".

Finally, it is clear from the foregoing that modifications and variations can be made to the machine 8 described above with reference to the attached figures without thereby departing from the scope of protection of the present invention, as defined in the attached claims.

In particular, the shape and size of the recesses 52, 52', 52" could be different from the one described and shown.

For example the sections 53, 53', 53" of the contour 50 could be axially offset with respect to the end portions 37, 37', 37" and/or the number of the starts of the screw 30 could be different from the one shown, for example one, two or four.

Moreover, the supports 15 could be different from those described and shown, for example they could support the casing 19; and/or the supports 15 could not be fixed to the tanks 5, 6 but, for instance, to the ground.

Finally, the machine 8 could also be used as a pump, rather than as a turbine, to transfer a liquid from a lower basin to an upper basin, thus letting the liquid come out through the compartments 42, 42', 42".

## Claims

1. A hydraulic screw machine (8) comprising support means (15) and a rotor (16) coupled to said support means (15) in a rotating manner about an axis (C) tilted with respect to a horizontal direction, said rotor (16) comprising:
- a tubular casing (19) that comprises an upper axial end (20); and
- a hydraulic screw (30) extending along said axis (C) in said casing (19), coupled in a fixed manner to said casing (19) and comprising:
a) a shaft (31) coaxial to said casing (19);
b) at least a helicoid (35, 35', 35") wound about said shaft (31) and having a radially outer helical edge (36, 36', 36") that extends in contact with said casing (19) and ends at an upper vertex (T, T', T") at said upper end (20);
- at least a compartment (42, 42', 42") axially delimited by an end portion (37, 37' 37") of said helicoid (35, 35', 35") and by an ideal plane (F) passing through said upper vertex (T, T', T") and orthogonal to said axis (C) ;
**characterised in that** said compartment (42, 42', 42") has at least a radially outwards facing opening.

2. The hydraulic screw machine according to claim 1, **characterised in that** said upper end (20) has a cylindrical shape.

3. The hydraulic screw machine according to claim 1, **characterised in that** said upper end (20) has a truncated conical shape diverging towards said upper vertex.

4. The hydraulic screw machine according to any one of the preceding claims, **characterised in that** said upper end (20) axially ends with a contour (50) comprising a recessed portion (51, 51', 51"); said opening (52, 52', 52") being defined by said ideal plane and said recessed portion (51, 51', 51").

5. The hydraulic screw machine according to claim 4, **characterised in that** said recessed portion (51, 51', 51") comprises a stretch (38, 38', 38") that is flush with said end portion (37, 37', 37").

6. The hydraulic screw machine according to any one of the preceding claims, **characterised in that** said opening is defined by a through hole (60) passing through said upper end (20).

7. The hydraulic screw machine according to any one of the preceding claims, **characterised in that** said screw (30) comprises a plurality of helicoids (35, 35', 35"), each having a respective said upper vertex (T, T', T"); said rotor (16) comprising, for each of said helicoids, a respective said compartment (42, 42', 42") having respective radial outwards facing openings (52, 52', 52").

8. The hydraulic screw machine according to claim 7, **characterised in that** said upper end (20) axially ends with a curvilinear contour (50) and comprises, for each of said helicoids, a respective recessed portion (51, 51', 51"); said openings (52, 52', 52") being defined by said ideal plane (F) and, respectively, by said recessed portions (51, 51', 51"); said recessed portions starting and ending at said upper vertexes (T, T', T").

9. An energy transformation hydraulic plant (1), the plant comprising:
- a downstream basin (3);
- an upstream basin (2) at a higher level than said downstream basin (3), designed to contain an operative liquid and comprising a bulkhead (7) designed to prevent said operative liquid from flowing down towards said downstream basin (3);
- a hydraulic screw machine (8) designed to be driven by the operative liquid that flows down from said upstream basin (2) towards said downstream basin (3) through said hydraulic machine (8);
**characterised in that** the hydraulic screw machine (8) is defined by any one of the preceding claims; said bulkhead (7) defining a seat (23) engaged in an angularly sliding manner by an intermediate axial portion (22) of said casing (19) so that said opening is arranged inside said upstream basin (2).
